# EUROPÄISCHE PATENTSCHRIFT

(11) **EP 4 021 849 B1**
(45) Veröffentlichungstag und Bekanntmachung des Hinweises auf die Patenterteilung: **03.01.2024**
(21) Anmeldenummer: 19761846.5
(22) Anmeldetag: 29.08.2019
(51) Int. Cl.: C01B 33/021, B25D 1/00, B25D 9/00, B25D 1/14

(54) **VERFAHREN ZUR HERSTELLUNG VON SILICIUMBRUCHSTÜCKEN**
METHOD FOR PRODUCING SILICON FRAGMENTS
PROCÉDÉ DE PRODUCTION DE FRAGMENTS DE SILICIUM

(43) Veröffentlichungstag der Anmeldung: 06.07.2022
(73) Patentinhaber: Wacker Chemie AG, 81737 München (DE)
(72) Erfinder: VIETZ, Matthias, 5230 Mattighofen (AT)
(74) Vertreter: Belz, Ferdinand
(86) Internationale Anmeldenummer: PCT/EP2019/073062
(87) Internationale Veröffentlichungsnummer: WO 2021/037366

(56) Entgegenhaltungen:
- EP-A1- 0 539 097
- EP-A1- 2 620 411
- DE-U- 7 534 420
- US-A1- 2016 201 223

## Beschreibung

Die Erfindung betrifft ein Verfahren zur Herstellung von Siliciumbruchstücken, wobei die Oberfläche eines Siliciumstabs mit einem Hammer und/oder Nadelhammer bearbeitet wird, um eine Oberflächenschicht zumindest teilweise zu entfernen.

Polykristallines Silicium (Polysilicium) dient als Ausgangsmaterial bei der Herstellung von einkristallinem (monokristallinem) Silicium, beispielsweise mittels Tiegelziehen (Czochralski- oder CZ-Verfahren) oder mittels Zonenschmelzen (Floatzone-Verfahren). Einkristallines Silicium wird in der Halbleiterindustrie zur Fertigung von elektronischen Bauelementen (Chips) verwendet.

Ferner wird Polysilicium zur Herstellung von multikristallinem Silicium, beispielsweise mittels Blockgussverfahren, benötigt. Das in Form eines Blocks erhaltene multikristalline Silicium kann zur Fertigung von Solarzellen eingesetzt werden.

Polysilicium kann durch das Siemens-Verfahren - ein chemischer Gasphasenabscheidungsprozess - gewonnen werden. Dabei werden in einem glockenförmigen Reaktor (Siemens-Reaktor) Trägerkörper (üblicherweise aus Polysilicium) durch direkten Stromdurchgang erhitzt und ein Reaktionsgas enthaltend eine siliciumhaltige Komponente und Wasserstoff eingeleitet. Die siliciumhaltige Komponente ist in der Regel Monosilan (SiH₄) oder ein Halogensilan der allgemeinen Zusammensetzung SiHₙX₄₋ₙ (n = 0, 1, 2, 3; X = Cl, Br, I). Üblicherweise handelt es sich um ein Chlorsilan oder Chlorsilangemisch, für gewöhnlich um Trichlorsilan (SiHCl₃, TCS). Überwiegend wird SiH₄ oder TCS im Gemisch mit Wasserstoff eingesetzt. Der Aufbau eines typischen Siemens-Reaktors ist beispielsweise in der EP 2 077 252 A2 oder EP 2 444 373 A1 beschrieben. Der Boden des Reaktors (Bodenplatte) ist generell mit Elektroden versehen, welche die Trägerkörper aufnehmen. Bei den Trägerkörpern handelt es sich für gewöhnlich um Filamentstäbe (Dünnstäbe) aus Silicium. Üblicherweise werden zwei Filamentstäbe mit einer Brücke (aus Silicium) zu einem Paar verbunden, das über die Elektroden einen Stromkreis bildet. Die Oberflächentemperatur der Filamentstäbe beträgt üblicherweise während der Abscheidung mehr als 1000°C. Bei diesen Temperaturen zersetzt sich die siliciumhaltige Komponente des Reaktionsgases und elementares Silicium scheidet sich aus der Gasphase als Polysilicium ab. Dadurch nimmt der Durchmesser der Filamentstäbe und der Brücke zu. Nach dem Erreichen eines vorgegebenen Durchmessers der Stäbe wird die Abscheidung üblicherweise gestoppt und die erhaltenen Polysiliciumstäbe ausgebaut. Nach dem Entfernen der Brücke werden annähernd zylinderförmige Siliciumstäbe erhalten. Diese werden üblicherweise mittels eines Brechers (z.B. Backenbrecher) zerkleinert und in Gebinde verschiedener Größe verpackt. Gegebenenfalls erfolgt vor der automatischen Zerkleinerung eine Vorzerkleinerung (z.B. händisch mit einem Hammer).

US 2016/0201223 A1 beschreibt ein Verfahren zu Herstellung von Polysiliciumbruchstücken, bei dem unter anderem ein Handhammer mit einer abriebarmen Beschichtung aus Wolframcarbid eingesetzt wird.

EP 2 620 411 A1 offenbart Polysiliciumbruchstücke mit einer geringen Oberflächenkonzentration an Bor und Phosphor. Die Bruchstücke werden durch eine Vorzerkleinerung mit einem Hartmetallhammer, gefolgt von einer Zerkleinerung mittels eines Backenbrechers erhalten.

Die Morphologie der Polysiliciumstäbe und der aus diesen erzeugten Bruchstücke hat generell einen starken Einfluss auf die Performance bei der Weiterverarbeitung. Grundsätzlich wird die Morphologie eines Polysiliciumstabes von den Parametern des Abscheidungsprozesses bestimmt (z.B. Stabtemperatur, Silan- und/oder Chlorsilankonzentration, spezifischer Durchfluss).

In Abhängigkeit der Parameter können sich bei der Abscheidung Grenzflächen unterschiedlicher Morphologiebereiche formieren. Diese Morphologiebereiche können insbesondere Löcher und/oder Gräben in unterschiedlicher Ausprägung enthalten. In der EP 2 662 335 A1 ist beschrieben wie sich durch Variation der Parameter Polysiliciumstäbe mit verschiedenen konzentrischen Morphologiebereichen erzeugen lassen.

Die Morphologie von Polysilicium kann von kompakt und glatt bis hin zu sehr porös und zerklüftet variieren. Kompaktes Polysilicium ist im Wesentlichen frei von Rissen, Poren, Fugen und Klüften. Die Rohdichte derartigen Polysiliciums kann mit der Reindichte von Silicium gleichgesetzt werden oder entspricht dieser zumindest in guter Näherung. Die Reindichte von Silicium beträgt 2,329 g/cm³.

Ein häufig auftretendes Problem, insbesondere bei der Herstellung von Polysiliciumstäben mit großen Durchmessern (> 150 mm), ist die Entstehung einer zerklüfteten Oberflächenschicht, die auch als Popcorn bezeichnet wird. Darunter sind Risse, Poren, Fugen und/oder Spalten zu verstehen, welche die Oberfläche des Polysiliciumstabes vergrößern. Zwar kann einer Entstehung von Popcorn durch Anpassung der Verfahrensparameter entgegengewirkt werden, allerdings geht dies für gewöhnlich mit einer längeren Prozessdauer und damit einer geringeren Ausbringung einher. Im Übrigen kann sich Popcorn auch durch spontane Ereignisse wie Staubabscheidungen bilden, wobei ein Gegensteuern hier grundsätzlich nur bei einer Früherkennung möglich ist.

Eine poröse und zerklüftete Morphologie hat insbesondere negative Auswirkungen auf das Kristallisationsverhalten von Polysilicium. Besonders stark zeigt sich dies beim CZ-Verfahren zur Herstellung von einkristallinem Silicium. Hier führt der Einsatz von zerklüftetem und porösem Polysilicium zu wirtschaftlich inakzeptablen Ausbeuten. Generell führt beim CZ-Verfahren besonders kompaktes Polysilicium zu deutlich höheren Ausbeuten. Ein Kristallisationsverfahren oder eine bestimmte Ausprägung eines solchen Verfahrens erreicht ein wirtschaftliches Optimum generell nur, wenn als Ausgangsmaterial Polysilicium eingesetzt wird, dessen Morphologie einen Grenzwert nicht übersteigt. Popcornhaltige Polysiliciumstäbe (im Ganzen oder zerkleinert) kommen als Ausgangsmaterial zur Herstellung von einkristallinem Silicium in der Regel nicht in Betracht.

Entsprechend wird Polysilicium neben seiner Reinheit auch nach seiner Morphologie unterschieden und klassifiziert. Grundsätzlich führt das Vorhandensein von Popcorn zu einer Einstufung in eine mindere Qualitätsklasse. Zwar ist es möglich nach einer Zerkleinerung von popcornhaltigen Polysiliciumstäben kompakte Bruchstücke von zerklüfteten zu trennen, allerdings sind solche Verfahren aufwändig und erfordern einen erheblichen Zeitaufwand.

Der Erfindung lag daher die Aufgabe zugrunde, ein Verfahren bereitzustellen, mit dem sich eine Popcornschicht nach dem Abscheidungsprozess selektiv entfernen lässt.

Diese Aufgabe wird gelöst durch ein Verfahren zur Herstellung von Siliciumbruchstücken mit den folgenden Schritten:
a) Bereitstellen eines Siliciumstabs oder eines Teilstücks,
b) Bearbeiten der Oberfläche des Siliciumstabs mit einem Hammer und/oder Nadelhammer zur zumindest teilweisen Entfernung einer Oberflächenschicht,
c) Zerkleinern des Siliciumstabs zu Bruchstücken durch ein thermisches Brechverfahren oder durch Hochspannungsimpulsbrechen oder durch eine Vorrichtung ausgewählt aus der Gruppe mit Backenbrecher, Walzenbrecher, Meißel und Vorschlaghammer,
wobei die Oberflächenschicht durch eine mit dem Hammer und/oder Nadelhammer aufgewendete Schlagenergie von 1 bis 15 J bis zu einer Tiefe von 1 bis 10 mm entfernt wird.

Bei dem Siliciumstab handelt es sich insbesondere um einen Polysiliciumstab, der vorzugsweise nach dem Siemens-Verfahren hergestellt ist. Bevorzugt wird der Polysiliciumstab unmittelbar nach seiner Entnahme aus einem Gasphasenabscheidungsreaktor, insbesondere Siemens-Reaktor wie er eingangs beschrieben ist, bereitgestellt. Vorzugsweise erfolgt das Bereitstellen mit einem Kran oder Greifer.

Die Länge der Siliciumstäbe (nach dem Entfernen der Brücke und ggf. eines Bereichs, der auf die Elektrode aufgewachsen ist) beträgt üblicherweise 1 bis 3,5 m. Es können grundsätzlich auch Teilstücke des Siliciumstabs mit einer beliebigen Länge bearbeitet werden. Der Durchmesser der in Schritt a) zu bearbeitenden Siliciumstäbe liegt für gewöhnlich bei 50 bis 350 mm.

Das Bereitstellen des Siliciumstabs kann in einem Reinraum erfolgen. Beispielsweise kann er dort liegend auf einer Werkbank platziert werden. Grundsätzlich kann der Siliciumstab auch stehend, insbesondere auf einer drehbaren Unterlage, bereitgestellt werden. Die Verwendung eines Reinraums oder einer Werkbank mit einer Schutzgasatmosphäre ist nicht zwingend erforderlich, kann allerdings, sofern erforderlich, den Reinheitsgrad der Bruchstücke erhöhen.

Bei dem Hammer handelt es sich insbesondere um einen von Hand geführten Hammer, der vorzugsweise ein Gesamtgewicht von nicht mehr als 2 kg aufweist. Idealerweise hat er ein Gesamtgewicht von 800 bis 1500 g. Der Hammer umfasst grundsätzlich einen Stiel und einen Kopf, wobei der Kopf zumindest einen mit dem Silicium in Kontakt tretenden Bereich mit einer Schlagfläche aufweist. Die Geometrie der Schlagfläche ist vorzugsweise eben (Bahn) oder kann leicht nach außen gewölbt sein. Auch eine Finne wie bei einem Schlosserhammer ist denkbar. Der mit dem Silicium in Kontakt tretende Bereich kann aus einem anderen Material als der übrige Kopf bestehen. Gegebenenfalls kann die Schlagfläche eine Beschichtung aufweisen. Beispielsweise kann es sich um einen wie in der EP 0 539 097 A1 beschriebenen Hammer handeln.

Unter einem Nadelhammer ist vorliegend ein Hammer zu verstehen, der mehrere (insbesondere ≥ 6) punktförmige (nadelförmige) Schlagflächen umfasst, wobei die Schlagfläche insbesondere kreisförmig ausgebildet ist und bevorzugt einen Radius von 0,5 bis 1,5 mm, besonders bevorzugt von 0,5 bis 1 mm aufweist. Insbesondere kann es sich um die Deckfläche eines Kegelstumpfes handeln. Gegebenenfalls kann die Deckfläche gewölbt (konvex) sein.

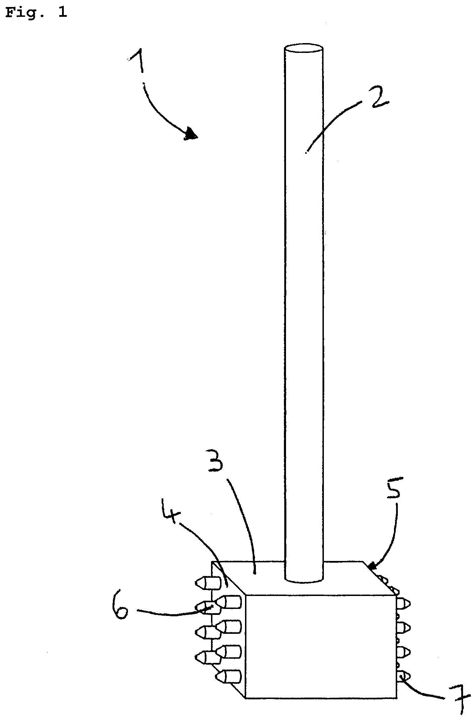

Bei dem Nadelhammer kann es sich z.B. um einen handgehaltenen Hammer handeln, dessen Kopf eine profilierte Bahn aufweist. Die Bahn ist dabei vorzugsweise mit mindestens sechs kegelförmigen Erhebungen (Nadeln) profiliert, welche jeweils eine Schlagfläche entsprechend der im vorangegangenen Absatz beschriebenen Vorgaben aufweisen. Die Erhebungen können eine Höhe 5 bis 20 mm haben. Ein solcher Hammer kann Ähnlichkeit mit einem Fleischklopfer aufweisen (vgl. Fig. 1).

Gemäß einer bevorzugten Ausführungsform handelt es sich bei dem Nadelhammer um ein maschinell (pneumatisch, elektrisch oder hydraulisch) betriebenes Gerät, das üblicherweise von Hand geführt wird. Synonym verwendete Begriffe für einen solchen Nadelhammer sind u.a. Nadelpistole, Nadelentroster, Nadelklopfer, Druckluftnadler, *engl.* Needlegun Scaler, *engl.* Needle Scaler. Derartige Geräte können auch zur Entfernung von Rost, Zunder und Farbschichten eingesetzt werden und sind kommerziell verfügbar. Der Nadelhammer weist mehrere Nadeln (in der Regel ≥ 6) auf, die in ihrer Gesamtheit als Nagelpaket bezeichnet werden können. Für gewöhnlich werden die Nadeln in Bohrungen einer Nagelplatte geführt. Der Antrieb lässt die Nadeln einzeln in Richtung des zu bearbeitenden Objekts nach vorn schießen. Die Nadeln haben in der Regel eine Länge von 5 bis 25 cm. Ihr Durchmesser liegt üblicherweise bei 2 bis 5 mm. Ein typischer Nadeldurchmesser beträgt 3 mm. Die Nadeln laufen insbesondere spitz zu und bilden eine Schlagfläche mit einem Radius von 0,5 bis 1,5 mm, besonders bevorzugt von 0,5 bis 1 mm.

Das Bearbeiten der Oberfläche in Schritt b) erfolgt besonders bevorzugt mit einem maschinellen Nadelhammer. Gegebenenfalls kann jedoch mit einem Hammer oder einem handgeführten Nadelhammer eine Nacharbeitung stattfinden.

Die mit dem Hammer und/oder Nadelhammer aufgewendete Schlagenergie beträgt bevorzugt 2 bis 10 J, besonders bevorzugt 3 bis 8 J. Ein typischer Bereich für die Schlagenergie ist 5 bis 8 J. Bei dem maschinellen Nadelhammer beziehen sich die genannten Werte jeweils auf eine Nadel. Die Schlagenergie kann bei maschinell betriebenen Nadelhämmern für gewöhnlich voreingestellt und ggf. sogar stufenlos verstellt werden.

Bei dem Hammer und dem handgeführten Nadelhammer können die unterschiedlichen Schlagenergien insbesondere durch Variieren der Fallhöhe realisiert werden.

Der maschinelle Nadelhammer wird vorzugsweise mit einer Schlagzahl von 2000 bis 5000 min⁻¹, bevorzugt 2500 bis 4000 min⁻¹, besonders bevorzugt 2800 bis 3500 min⁻¹, betrieben.

Vorzugsweise umfasst der Nadelhammer 6 bis 24, besonders bevorzugt 6 bis 18, insbesondere bevorzugt 6 bis 12, Nadeln. Für die Ausführbarkeit der Erfindung ist es dabei grundsätzlich unerheblich, ob es sich bei den Nadeln wie beim handgeführten Nadelhammer um zylinderförmige und/oder kegelförmige Erhebungen auf dem Hammerkopf handelt, oder um 5 bis 25 cm lange Stahlstangen beim maschinellen Nadelhammer handelt.

Es hat sich gezeigt, dass sich mit einem Hammer oder Nadelhammer bei einer maximalen Schlagenergie von 15 J nicht nur besonders selektiv eine Oberflächenschicht aus Popcorn von Siliciumstäben entfernen lässt, sondern auch großflächig in einer wirtschaftlich akzeptablen Zeitspanne. Angesichts der Sprödigkeit von Silicium war dies nicht zu erwarten. Unter selektiv soll hier insbesondere verstanden werden, dass die Dicke der abzutragenden Schicht im Wesentlichen konstant gehalten und in Abhängigkeit der Beschaffenheit der Siliciumstaboberfläche variiert werden kann.

Aufgrund der Vielzahl an energiearmen Schlägen durch die Nadeln des Nadelhammers wird eine hohe Selektivität erreicht. Ferner hat sich gezeigt, dass bei Verwendung geeigneter Hartmetallwerkstoffe nur eine sehr geringe Kontamination des Siliciums mit dem betreffenden Hartmetall messbar ist. So konnte beispielsweise bei Verwendung eines Nadelhammers mit 6 oder 12 Nadeln (Schlagenergie 6 J) aus Wolframcarbid eine Kontamination von weniger als 10 pptw Wolfram festgestellt werden. Bei einem Nadelhammer mit 26 Nadeln (Schlagenergie 6 J) betrug die Kontamination weniger als 20 pptw. Die Kontamination nach der Bearbeitung kann beispielsweise mittels ICP-MS (*engl.* Inductively Coupled Plasma - Mass Spectrometry) bestimmt werden. Zur Erzeugung der Probe wird dabei die Oberfläche eines definierten Stabsegments mit einer Mischung aus HF/HNO₃ abgespült. Die Kontamination mit Metallen kann dann auf das Gewicht des Probenkörpers bezogen werden.

Auch die Verwendung eines 1 kg schweren Hammers (vgl. EP 0 539 097 A1) mit einer Schlagfläche aus Wolframcarbid und einer Schlagenergie von 15 J führte zu geringen Werten von weniger als 50 pptw Wolfram.

Die Nadeln des Nadelhammers und/oder zumindest der mit dem Silicium in Kontakt tretende Teil des Hammers, insbesondere die Schlagfläche, bestehen vorzugsweise aus einem kontaminationsarmen Material, das ausgewählt ist aus der Gruppe mit Carbiden, Metallkeramiken, Keramiken und Kombinationen davon.

Besonders bevorzugt ist das Material ausgewählt aus der Gruppe mit Wolframcarbid, Wolframcarbid mit einem Cobaltbinder, Wolframcarbid mit einem Nickelbinder, Titancarbid, Chromcarbid (z.B. Cr₃C₂) mit Nickel-Chrom-Legierungsbinder, Tantalcarbid, Niobcarbid, Siliciumnitrid, Siliciumcarbid in einer Matrix (z.B. Fe, Ni, Al, Ti oder Mg), Aluminiumnitrid, Titancarbid mit Cobalt- und Titancarbonitrid, Nickel, Nickel-Cobalt-Legierung, Eisen und Kombinationen davon.

Ein Beispiel eines geeigneten Materials auf Basis von Wolframcarbid findet sich in der EP 3 036 190 B1.

Die Kontamination des Polysiliciums mit Metallen aus den Materialien des Hammers oder Nadelhammers beträgt nach der Bearbeitung in Schritt b) vorzugsweise weniger als 50 pptw, insbesondere weniger als 30 pptw, des betreffenden Metalls.

Die Oberflächenschicht, bei der es sich insbesondere um Popcorn handelt, also mit Rissen, Löchern und/oder Poren durchzogenes Silicium, wird in Verfahrensschritt b) bis zu einer Tiefe von 1 bis 10 mm, bevorzugt 1 bis 5 mm, insbesondere bevorzugt 1 bis 3 mm, abgetragen. Sowohl mit dem Hammer als auch mit dem Nadelhammer lassen sich auch Schichten von nur 1 mm stärke selektiv entfernen. Die Tiefe, bis zu der abgetragen werden soll, richtet sich insbesondere auch nach dem Durchmesser des zu bearbeitenden Siliciumstabs und der Kompaktheit des verbleibenden Materials (generell sollte versucht werden, ein Bruch des Stabes zu vermeiden). Bei den Werten für die Abtragstiefe handelt es sich generell um Durchschnittswerte. Es ist durchaus üblich, dass Oberflächenbereiche eines Siliciumstabs weniger Popcorn enthalten als andere. Entsprechend kann die Tiefe des Abtrags variieren. Üblicherweise werden aus wirtschaftlichen Gründen nur partiell von Popcorn bedeckte Siliciumstäbe in Schritt b) bearbeitet.

Gemäß einer bevorzugten Ausführungsform des Verfahrens erfolgt zwischen den Schritten a) und b) und/oder zwischen den Schritten b) und c) eine Bestimmung der Rauheit des Siliciumstabs.

Vor der Durchführung des Schritts b) kann auf diese Weise insbesondere festgestellt werden, bis zu welcher Tiefe eine unerwünschte Oberflächenschicht (Popcorn) abzutragen ist. Die ermittelte Rauheit kann ferner die Wahl des geeigneten Hammers oder Nadelhammers erleichtern.

Anhand der Bestimmung der Rauheit nach dem Schritt b) kann insbesondere der Erfolg der Bearbeitung übergeprüft werden. Gegebenenfalls wird der Schritt b) in Abhängigkeit der ermittelten Rauheit wiederholt, also der Siliciumstab nachbearbeitet.

Die Bestimmung der Rauheit kann im einfachsten Fall mit dem Auge erfolgen. Anhand der Zerklüftetheit der Oberfläche kann der Fachmann in etwa feststellen, wie dick die zu entfernende Oberflächenschicht ist bzw. ob eine Nachbearbeitung erforderlich ist.

Ferner kann eine indirekte Messung unter Verwendung einer transparenten Folie wie in der EP 2 578 724 A1 beschrieben erfolgen. Dabei wird ein Siliciumstab mit der Folie umwickelt und Areale mit Popcorn entsprechend auf der Folie markiert. Anschließend wird die Folie mit den Markierungen fotografiert und mittels Bildbearbeitung der Popcornanteil bestimmt, um so Rückschlüsse auf die Rauheit ziehen zu können. Allerdings ist hier insbesondere der erforderliche Zeitaufwand nachteilig.

Vorzugsweise wird die Bestimmung der Rauheit allerdings technisch durchgeführt. Hierzu kommen verschiedene Methoden in Betracht.

Beispielsweise kann ein taktiles Messverfahren gemäß ISO 4288:1998 angewendet werden. Dabei wird über eine Tastnadel die Oberflächenrauigkeit ermittelt. Dieses Verfahren ist allerdings bei einer ausgeprägten Zerklüftung der Oberfläche aufgrund der hohen Varianz nur eingeschränkt anwendbar.

Bevorzugt bei der Bestimmung der Rauheit sind berührungslose 2D- und 3D-Messverfahren. Beispielsweise kann durch eine laseroptische Abtastung ein Mikroprofil der Siliciumstaboberfläche erzeugt werden. Auch lassen sich Topographiebilder der Staboberfläche erzeugen, anhand derer sich Areale mit Popcorn identifizieren lassen. Das Messprinzip beruht auf einer Winkelmessung des reflektierten Streulichtes. Aus dem Mikroprofil können insbesondere die Rauheitskennwerte Ra (arithmetische mittlere Abweichung des Profils, *engl.* Roughness average) und RPc (Spitzenzählungswert, *engl.* Peak count number) gemäß DIN EN ISO 4287/4288 und DIN EN 10049 ermittelt werden. Aus Topographiebildern lassen sich insbesondere mittels Bildbearbeitung Kennzahlen für die Rauheit ableiten, beispielsweise aus dem Verhältnis von Minima (Tälern) und Maxima (Bergen).

Die Oberfläche des Siliciumstabs nach der Bearbeitung in Schritt b) ist vorzugsweise geschlossen, weist also im Wesentlichen keine Risse, Poren oder Löcher mehr auf. Bei einer vollständig geschlossenen Oberfläche sind die Rauheitswerte (bspw. Ra) grundsätzlich nicht relevant, da sich ohnehin eine Zerkleinerung anschließt. Allerdings können anhand von Topographiebildern, die bspw. mittels einer Laserabtastung generierten werden, Areale identifizieren, die einer erneuten Bearbeitung unterzogen werden müssen. Daher kann es bevorzugt sein, dass der bearbeitete Siliciumstab erst der Zerkleinerung in Schritt c) zugeführt wird, wenn mindestens 85 %, bevorzugt mindestens 90%, besonders bevorzugt mindestens 95 %, der Oberfläche keine Risse, Poren oder Löcher mehr aufweisen. Erfüllt der Siliciumstab diese Anforderung nicht, kann eine Wiederholung des Schritts b), also eine Nachbearbeitung, erfolgen, an die sich dann eine erneute Laserabtastung anschließt.

Das Zerkleinern in Schritt c) erfolgt durch ein thermisches Brechverfahren oder durch Hochspannungsimpulsbrechen oder mittels herkömmlicher Backen- oder Walzenbrecher. Oder das Zerkleinern erfolgt mit einem Hammer oder Vorschlaghammer (z.B. 5 bis 7 kg schwer) oder einem Druckluftmeißel.

Vorzugsweise findet zwischen den Schritten b) und c) und/oder nach dem Schritt c) ein Reinigungsschritt statt.

Des Weiteren kann es sich bei dem Schritt c) auch um eine Vorzerkleinerung handeln, an welche sich zumindest ein weiterer Zerkleinerungsschritt, ggf. gefolgt von einer Sortierung, anschließt. Eine Zerkleinerung von Polysilicium in Verbindung mit einem Reinigungsschritt ist in EP 2 695 874 A1 beschrieben.

Das erfindungsgemäße Verfahren ist insbesondere Bestandteil eines Verfahrens zur Herstellung von polykristallinem Silicium mit den folgenden Schritten:
- Abscheiden von Silicium mittels chemischer Gasphasenabscheidung durch Einleiten eines Reaktionsgases, das neben Wasserstoff Silan und/oder zumindest ein Halogensilan enthält, in einen Reaktionsraum eines Reaktors, wobei der Reaktionsraum mindestens einen erhitzten Filamentstab umfasst, auf welchem das Silicium unter Bildung eines polykristallinen Siliciumstabs abgeschieden wird,
- Ausbauen und Bereitstellen des polykristallinen Siliciumstabs,
- Bearbeiten der Siliciumstaboberfläche mit einem Hammer und/oder Nadelhammer zur zumindest teilweisen Entfernung einer Oberflächenschicht
- Zerkleinern des bearbeiteten Siliciumstabs zu Bruchstücken.

- **Fig. 1:**: Erfindungsgemäßer handgeführter Nadelhammer
- **Fig. 2:**: Detaildarstellung einer Nadel

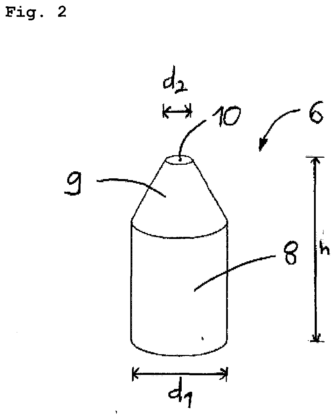

Die Fig. 1 zeigt einen handgeführten Nadelhammer 1 mit einem Stiel 2 und einem Kopf 3. Sowohl der Stiel 2 als auch der Kopf 3 haben einen Edelstahlkern, der mit einem Kunststoff (z.B. Polyethylen, Polypropylen oder Polyurethan) ummantelt ist. Der Kopf 3 hat eine erste und eine zweite flache, rechteckige Stirnseite (Bahn) 4, 5. Auf der ersten Stirnseite 4 sind acht Nadeln 6, und auf der zweiten Stirnseite 5 zwölf Nadeln 7 angeordnet. Die Nadeln 6, 7 können mit dem Edelstahlkern beispielsweise verschraubt sein und sind nicht mit dem Kunststoff bedeckt. Eine Detaildarstellung einer Nadel 6 ist der Fig. 2 zu entnehmen. Die Nadeln 6 weisen einen größeren Durchmesser als die Nadeln 7 auf. Eine symmetrische Anordnung der Nadeln 6, 7 ist nicht zwingend erforderlich. Ein typischer Hammer 1 hat z.B. ein Gewicht von 1 kg, und die Nadeln 6, 7 weisen einen Durchmesser d₁ von 4 mm bzw. 3 mm auf.

Die Fig. 2 zeigt eine detaillierte Darstellung einer Nadel 6 aus Fig. 1. Die Nadel 6 hat einen zylindrischen Teil 8 und eine Spitze 9. Der zylindrischen Teil 8 hat einen Durchmesser d₁ von bspw. 4 mm. Die Spitze 9 hat die Form eines Kegelstumpfes, wobei die kreisförmige Deckfläche 10 die Schlagfläche darstellt. Die Deckfläche 10 hat typischerweise einen Durchmesser d₂ von 1 mm. Die Höhe h der Nadel 6 beträgt etwa 12 mm.

### Beispiel

Es wurden 5 erfindungsgemäße Bearbeitungswerkzeuge (Hämmer und Nadelhämmer, Zeilen 1 bis 5) und 2 handgeführte Hämmer (Zeilen 6 und 7) für die Entfernung von Popcorn an Polysiliciumstäben mit einem Durchmesser von ca. 250 mm getestet. Die Stäbe entstammten derselben Batch (äußerer Stabkreis) eines Siemens-Reaktors mit einer Ausbringung von 24 Stabpaaren. Alle Stäbe wiesen im oberen Bereich, wo zuvor die Brücke war, Popcorn auf (die Tiefe der Gräben betrug bis zu 4 mm).

Die Stäbe wurden vor und nach der Bearbeitung gewogen, um die Ausbeute zu berechnen. Die Bestimmung der bearbeiteten Staboberfläche wurde mittels Stoppuhr und Vorher-/Nachher-Bildaufnahmen ermittelt, wobei zur Flächenbestimmung eine Bildverarbeitungssoftware genutzt wurde. Die Bestimmung der Kontamination erfolgte mittels ICP-MS wie beschrieben. Die Schlagenergien der pneumatischen Nadelhämmer konnten am Gerät voreingestellt werden. Bei den Schlagenergien der handgeführten Hämmer (handelt es sich um Durchschnittswerte, die mittels piezoelektrischer Kraftsensoren bestimmt wurden. Dabei wurde der Hammer in eine Vorrichtung eingespannt und in unterschiedlichen Höhen auf die Messvorrichtung fallen gelassen. Der Messaufbau war so konzipiert, dass die Versuchsergebnisse reproduzierbar wiederholt werden konnten. Die Selektivität wurde anhand von nach der Bearbeitung erstellten Topographieaufnahmen (mittels laseroptischer Abtastung) ermittelt, wobei "++" einem sehr gleichmäßigen Abtrag mit vollständiger Popcorn-Entfernung und "-" einem unregelmäßigen Abtrag mit hohem Verlust an Zielmaterial entspricht. "- -" entspricht einem Bruch des Polysiliciumstabs (vgl. Tabelle 1).

Die Nadeln der pneumatischen Nadelhämmer umfassten ein Wolframcarbid-Kobalt (WC-Co)-Hartmetall mit einem Co-Anteil von 10 %. Die Korngröße des WC betrug 0,6 µm. Die Nadeln wiesen eine runde Schlagfläche mit einem Durchmesser von 1 mm und einen Gesamtdurchmesser von 3 mm auf. Die Nadeln des handgeführten Nadelhammers (vgl. Fig. 1) bestanden ebenfalls aus WO-Co-Hartmetall wie oben beschrieben. Die Schlagfläche der Nadeln war identisch zu den Nadeln der pneumatischen Nadelhämmer. Bei dem Hammer aus Zeile 1 handelte es sich um einen Hammer gemäß EP 0 539 097 A1, dessen Schlagfläche aus einem WC-Co-Hartmetall bestand wie oben beschrieben. Die Köpfe der handgeführten Hämmer aus den Zeilen 6 und 7 waren aus einem WC-Co-Hartmetall mit einem Co-Anteil von 10 % und einer WC-Korngröße von 2,5 bis 4 µm. Die Schlagfläche war rund und minimal nach außen gewölbt.

**Tabelle 1**

| # | Bearbeitungswerkzeug | Schlagenergie | Kontamination W [pptw] | Selektivität | Ausbeute [%] (Anteil Zielmaterial) | bearbeitete Staboberfläche/ Sekunde |
|---|---|---|---|---|---|---|
| 1 | Hammer (1kg) | 10 bis 15 J | 50 pptw | + | 75% | 5 cm² |
| 2 | pneumatischer Nadelhammer (6 Nadeln) | 6 J | <10 pptw | ++ | >95% | 1-5 cm² |
| 3 | pneumatischer Nadelhammer (12 Nadeln) | 6J | <10 pptw | ++ | 90% | 2-8 cm² |
| 4 | pneumatischer Nadelhammer (24 Nadeln) | 6J | 20 pptw | ++ | 85% | 5-10 cm² |
| 5 | handgeführter Nadelhammer (9 Nadeln, 1 kg) | 10 bis 15 J | <10 pptw | ++ | >95% | 1-2 cm² |
| 6 | Hammer (2,5 kg) | 100 J | 200 pptw | - | 50% | 20 cm² |
| 7 | Hammer (6 kg) | 300 J | 1000 pptw | - - | 20% | - |

Anhand der Ergebnisse ist gut zu erkennen, dass bei der Verwendung von pneumatischen Nadelhämmern mit 6 oder 12 Nadeln eine sehr gute Selektivität bei sehr geringer Kontamination mit Wolfram resultiert. Die Ausbeute ist bei 6 Nadeln noch größer als bei 12, allerdings geht dies mit einer längeren Arbeitszeit einher. Die Wirtschaftlichkeit richtet sich hier insbesondere auch nach der Art (dem Qualitätserfordernis) des hergestellten Polysiliciumstabs.

Ebenfalls eine sehr gute Ausbeute und Selektivität bei nur geringer Kontamination wird mit dem handgeführten Nadelhammer (vgl. Fig. 1) realisiert. Abhängig von der Fallhöhe variiert hier die Schlagenergie in engen Grenzen. Auch der bekannte Hammer gemäß Zeile 1 kann bei niedriger Schlagenergie eine Alternative zu den zuvor beschriebenen Varianten sein, da sich die Kontamination in einem Akzeptablen Bereich bewegt und in kurzer Zeit relativ große Areale bearbeitet werden können. Insbesondere zur punktuellen Entfernung von Popcorn kann dieser Hammer eine günstige Alternative sein.

Mit den handgeführten Hämmern aus den Zeilen 6 und 7 war eine selektive Entfernung des Popcorns nicht möglich. Der 2,5 kg schwere Hammer verursachte sehr große Abplatzungen und damit eine sehr ungenaue Abtrennung der Popcornschicht. Die Verwendung des 6 kg schweren Hammers führte zum Bruch der Stäbe. Eine Entfernung der Schicht war nicht möglich.

## Patentansprüche

1. Verfahren zur Herstellung von Siliciumbruchstücken, umfassend die Schritte
a) Bereitstellen eines Siliciumstabs,
b) Bearbeiten der Oberfläche des Siliciumstabs mit einem Hammer und/oder Nadelhammer zur zumindest teilweisen Entfernung einer Oberflächenschicht,
c) Zerkleinern des Siliciumstabs zu Bruchstücken durch ein thermisches Brechverfahren oder durch Hochspannungsimpulsbrechen oder durch eine Vorrichtung ausgewählt aus der Gruppe mit Backenbrecher, Walzenbrecher, Meißel und Vorschlaghammer,
wobei die Oberflächenschicht durch eine mit dem Hammer und/oder Nadelhammer aufgewendete Schlagenergie von 1 bis 15 J bis zu einer Tiefe von 1 bis 10 mm entfernt wird.

2. Verfahren nach Anspruch 1, **dadurch gekennzeichnet, dass** die mit dem Hammer und/oder Nadelhammer aufgewendete Schlagenergie 2 bis 10 J, bevorzugt 3 bis 8 J, beträgt.

3. Verfahren nach Anspruch 1 oder 2, **dadurch gekennzeichnet, dass** der Nadelhammer 6 bis 24, bevorzugt 6 bis 18, besonders bevorzugt 6 bis 12, Nadeln umfasst.

4. Verfahren nach einem der vorhergehenden Ansprüche, **dadurch gekennzeichnet, dass** die Nadeln des Nadelhammers jeweils eine kreisförmige Schlagfläche mit einem Radius von 0,5 bis 1,5 mm, besonders bevorzugt von 0,5 bis 1 mm, aufweisen.

5. Verfahren nach einem der vorhergehenden Ansprüche, **dadurch gekennzeichnet, dass** es sich bei dem Nadelhammer um einen elektrisch, pneumatisch oder hydraulisch betriebenen Nadelhammer handelt.

6. Verfahren nach Anspruch 4, **dadurch gekennzeichnet, dass** der Nadelhammer mit einer Schlagzahl von 2000 bis 5000 min ¹, bevorzugt 2500 bis 4000 min⁻¹, besonders bevorzugt 2800 bis 3500 min⁻¹, betrieben wird.

7. Verfahren nach einem der vorhergehenden Ansprüche, **dadurch gekennzeichnet, dass** die Nadeln des Nadelhammers und/oder zumindest der mit dem Polysilicium in Kontakt tretende Teil des Hammers aus einem Material besteht, das ausgewählt ist aus der Gruppe mit Carbid, Metallkeramik, Keramik und Kombinationen davon.

8. Verfahren nach einem der vorhergehenden Ansprüche, **dadurch gekennzeichnet, dass** die Nadeln des Nadelhammers und/oder zumindest der mit dem Polysilicium in Kontakt tretende Teil des Hammers aus einem Material besteht, das ausgewählt ist aus der Gruppe mit Wolframcarbid, Wolframcarbid mit einem Cobaltbinder, Wolframcarbid mit einem Nickelbinder, Titancarbid, Chromcarbid (z.B. Cr₃C₂) mit Nickel-Chrom-Legierungsbinder, Tantalcarbid, Niobcarbid, Siliciumnitrid, Siliciumcarbid in einer Matrix (z.B. Fe, Ni, Al, Ti oder Mg), Aluminiumnitrid, Titancarbid mit Cobalt- und Titancarbonitrid, Nickel, Nickel-Cobalt-Legierung, Eisen und Kombinationen davon.

9. Verfahren nach einem der vorhergehenden Ansprüche, **dadurch gekennzeichnet, dass** die Oberflächenschicht bis zu einer Tiefe von 1 bis 5 mm, bevorzugt 1 bis 3 mm, entfernt wird.

10. Verfahren nach einem der vorhergehenden Ansprüche, **dadurch gekennzeichnet, dass** zwischen den Schritten a) und b) und/oder zwischen den Schritten b) und c) die Rauheitskennwerte Ra und/oder RPc gemäß DIN EN ISO 4287/4288 und DIN EN 10049 des Siliciumstabs bestimmt werden.

11. Verfahren nach einem der vorhergehenden Ansprüche, **dadurch gekennzeichnet, dass** der Schritt b) nach einer Bestimmung der Rauheit des bearbeiteten Siliciumstabs wiederholt wird.

## Claims

1. Process for producing silicon chunks, comprising the steps of
a) providing a silicon rod,
b) treating the surface of the silicon rod with a hammer and/or needle hammer for at least partial removal of a surface layer,
c) comminuting the silicon rod into chunks via a thermal crushing process or via high-voltage impulse crushing or via an apparatus selected from the group comprising jaw crusher, roller crusher, chisel and sledgehammer,
wherein the surface layer is removed to a depth of 1 to 10 mm by an impact energy applied with the hammer and/or needle hammer of 1 to 15 J.

2. Process according to Claim 1, **characterized in that** the impact energy applied with the hammer and/or needle hammer is 2 to 10 J, preferably 3 to 8 J.

3. Process according to Claim 1 or 2, **characterized in that** the needle hammer comprises 6 to 24, preferably 6 to 18, particularly preferably 6 to 12, needles.

4. Process according to any of the preceding claims, **characterized in that** the needles of the needle hammer each have a circular impact surface having a radius of 0.5 to 1.5 mm, particularly preferably of 0.5 to 1 mm.

5. Process according to any of the preceding claims, **characterized in that** the needle hammer is an electrically, pneumatically or hydraulically operated needle hammer.

6. Process according to Claim 4, **characterized in that** the needle hammer is operated with an impact speed of 2000 to 5000 min⁻¹, preferably 2500 to 4000 min⁻¹, particularly preferably 2800 to 3500 min⁻¹.

7. Process according to any of the preceding claims, **characterized in that** the needles of the needle hammer and/or at least the polysilicon-contacting part of the hammer are made of a material selected from the group comprising carbide, metal-ceramic, ceramic and combinations thereof.

8. Process according to any of the preceding claims, **characterized in that** the needles of the needle hammer and/or at least the polysilicon-contacting part of the hammer are made of a material selected from the group comprising tungsten carbide, tungsten carbide with a cobalt binder, tungsten carbide with a nickel binder, titanium carbide, chromium carbide (for example Cr₃C₂) with a nickel-chromium alloy binder, tantalum carbide, niobium carbide, silicon nitride, silicon carbide in a matrix (e.g. Fe, Ni, Al, Ti or Mg), aluminium nitride, titanium carbide with cobalt and titanium carbonitride, nickel, nickel-cobalt alloy, iron and combinations thereof.

9. Process according to any of the preceding claims, **characterized in that** the surface layer is removed to a depth of 1 to 5 mm, preferably 1 to 3 mm.

10. Process according to any of the preceding claims, **characterized in that** the roughness parameters Ra and/or RPc according to DIN EN ISO 4287/4288 and DIN EN 10049 of the silicon rod are determined between steps a) and b) and/or between steps b) and c).

11. Process according to any of the preceding claims, **characterized in that** step b) is repeated after a determination of the roughness of the treated silicon rod.

## Revendications

1. Procédé de fabrication de fragments de silicium, comprenant les étapes suivantes :
a) fourniture d'une barre de silicium,
b) usinage de la surface de la barre de silicium avec un marteau et/ou un marteau à aiguilles pour éliminer au moins partiellement une couche superficielle,
c) broyage de la barre de silicium en fragments par un procédé de broyage thermique ou un broyage par impulsions haute tension ou par un dispositif choisi dans le groupe broyeur à mâchoires, broyeur à rouleaux, ciseau et marteau de forgeron,
dans lequel la couche superficielle est éliminée par une énergie de choc appliquée avec le marteau et/ou le marteau à aiguilles de 1 à 15 J jusqu'à une profondeur de 1 à 10 mm.

2. Procédé selon la revendication 1, **caractérisé en ce que** l'énergie de choc appliquée par le marteau et/ou le marteau à aiguilles est de 2 à 10 J, de préférence de 3 à 8 J.

3. Procédé selon la revendication 1 ou 2, **caractérisé en ce que** le marteau à aiguilles comprend 6 à 24, de préférence 6 à 18, d'une manière particulièrement préférée 6 à 12 aiguilles.

4. Procédé selon l'une des revendications précédentes, **caractérisé en ce que** chacune des aiguilles du marteau à aiguilles présente une surface de choc circulaire ayant un rayon de 0,5 à 1,5 mm, d'une manière particulièrement préférée de 0,5 à 1 mm.

5. Procédé selon l'une des revendications précédentes, **caractérisé en ce que** le marteau à aiguilles est un marteau à aiguilles à commande électrique, pneumatique ou hydraulique.

6. Procédé selon la revendication 4, **caractérisé en ce que** le marteau à aiguilles est utilisé avec un nombre de coups de 2 000 à 5 000 min⁻¹, de préférence de 2 500 à 4 000 min⁻¹, d'une manière particulièrement préférée de 2 800 à 3 500 min⁻¹.

7. Procédé selon l'une des revendications précédentes, **caractérisé en ce que** les aiguilles du marteau à aiguilles et/ou au moins la partie du marteau entrant en contact avec le polysilicium sont constituées d'un matériau qui est choisi dans le groupe carbure, métallo-céramique, céramique ou combinaisons de ceux-ci.

8. Procédé selon l'une des revendications précédentes, **caractérisé en ce que** les aiguilles du marteau à aiguilles et/ou au moins la partie du marteau entrant en contact avec le polysilicium sont constituées d'un matériau choisi dans le groupe carbure de tungstène, carbure de tungstène avec liant cobalt, carbure de tungstène avec liant nickel, carbure de titane, carbure de chrome (par exemple Cr₃C₂) avec liant alliage nickel-chrome, carbure de tantale, carbure de niobium, nitrure de silicium, carbure de silicium dans une matrice (par exemple Fe, Ni, Al, Ti ou Mg), nitrure d'aluminium, carbure de titane avec carbonitrure de cobalt et de titane, nickel, alliage nickel-cobalt, fer, et combinaisons de ceux-ci.

9. Procédé selon l'une des revendications précédentes, **caractérisé en ce que** la couche superficielle est éliminée jusqu'à une profondeur de 1 à 5 mm, de préférence de 1 à 3 mm.

10. Procédé selon l'une des revendications précédentes, **caractérisé en ce qu'**entre les étapes a) et b) et/ou entre les étapes b) et c), on détermine les paramètres de rugosité Ra et/ou RPc selon DIN EN ISO 4287/4288 et DIN EN 10049 de la barre de silicium.

11. Procédé selon l'une des revendications précédentes, **caractérisé en ce que** l'étape b) est répétée après une détermination de la rugosité de la barre de silicium usinée.
